# EUROPÄISCHE PATENTANMELDUNG

(11) **EP 0 613 722 A1**
(43) Veröffentlichungstag der Anmeldung: **07.09.1994**
(21) Anmeldenummer: 93113830.9
(22) Anmeldetag: 30.08.1993
(51) Int. Cl.: B03B 9/00

(54) **Verfahren und Vorrichtung zur Trennung von Wasser und Feststoffen, insbesondere zur Gewinnung von wiederverwendbarem Sand**

(30) Priorität: 05.03.1993 DE 4306929
(71) Anmelder: ROMPF KLÄRWERKEINRICHTUNGEN GmbH & Co., D-35759 Driedorf-Roth (DE)
(72) Erfinder: Hägerich, Bodo, Dipl. Ing., D-35759 Driedorf (DE); Koch, Manfred, Verfahrenstechniker, D-35767 Breitscheid (FR); Ruscheinski, Robert, Dipl. Ing., D-35583 Wetzlar (DE); Klinger, Horst, Dipl. Ing., D-71634 Ludwigsburg (DE)
(74) Vertreter: Missling, Arne, Dipl.-Ing.

(57) **Zusammenfassung**

Die Erfindung bezieht sich auf ein Verfahren und eine Vorrichtung zur Trennung von Wasser und Feststoffen, insbesondere zur Gewinnung von wiederverwendbarem Sand. Um die Entsorgungskosten zu minimieren und um das Deponievolumen zu verringern, ist erfindungsgemäß vorgesehen, daß Sand, beispielsweise aus einem Sandfang (5) in einen Vorlagesumpf (1) eingebracht, mittels einer ersten Fördereinrichtung (8) nach Zufuhr von Wasser in eine Siebeinrichtung (2) überführt und von großen Festkörpern getrennt wird. Das verbleibende Wasser-Feststoff-Gemisch wird über eine zweite Fördereinrichtung (10) einem Hydrozyklon (3) und einem Wirbelschichtsortierer (4) zugeführt. Mittels einer Entwässerungsvorrichtung (11) erfolgt die restliche Trennung des Sandes von dem Wasser.

## Beschreibung

Die Erfindung bezieht sich auf ein Verfahren und eine Vorrichtung zur Trennung von Wasser und Feststoffen, insbesondere zur Gewinnung von wiederverwendbarem Sand.

Durch die steigenden Anforderungen zum Schutze der Umwelt und durch die als Folge hiervon gestiegenen Entsorgungskosten ergibt sich auch die Problematik, Mischungen von Wasser und Feststoffen soweit aufzubereiten, daß ein möglichst hoher Anteil der Feststoffe wiederverwendbar ist und nicht auf Deponien endgelagert werden muß.

Aus dem Stand der Technik ist es bekannt, Rechengut und Sandfangsedimente ohne weitere Verarbeitung auf Deponien abzulagern. Eine Trennung der Sandfangsedimente in wiederverwertbare Bestandteile und zu deponierende Bestandteile ist bisher nicht erfolgt, da keine technisch brauchbaren und kostengünstig arbeitenden Anlagen zur Verfügung standen.

Der Stand der Technik zeigt zwar Verfahren und Vorrichtungen zum Waschen und Klassieren kontaminierter Böden, diese Anlagen sind jedoch insbesondere für die Gewinnung von wiederverwendbarem Sand nicht geeignet. Der Grund hierfür liegt in dem komplexen Aufbau und in der Notwendigkeit, unterschiedlichste Ausgangsmaterialien bearbeiten zu müssen.

Der Erfindung liegt die Aufgabe zugrunde, ein Verfahren und eine Vorrichtung der eingangs genannten Art zu schaffen, welche bei einfachem Aufbau und einfacher, wirtschaftlicher Anwendbarkeit die Gewinnung von wiederverwendbarem Sand ermöglichen und zur Verringerung des zu deponierenden Materials beitragen.

Erfindungsgemäß wird die Aufgabe bezüglich des Verfahrens dadurch gelöst, daß Wasser und Feststoffe aus einem Vorlagesumpf einer Siebeinrichtung zugeführt werden, in welcher Feststoffe, deren Größe oberhalb einer oberen Grenzkorngröße liegt, abgetrennt werden, daß das Wasser und die restlichen Feststoffe einem Hydrozyklon zugeführt werden, in welchem Feststoffe mit einer Größe unterhalb einer unteren Grenzkorngröße abgetrennt werden, daß das Wasser und die restlichen Feststoffe zur Abtrennung von anhaftenden organischen Verunreinigungen einem Wirbelschichtsortierer zugeführt werden, und daß das verbleibende Gemisch entwässert wird.

Unter Verwendung des erfindungsgemäßen Verfahrens ist es möglich, große Mengen von Sand zu erhalten. Als Ausgangsmaterial werden beispielsweise Stoffe verwendet, welche sich in Sandfängen abgesetzt haben, beispielsweise bei der Oberflächenentwässerung. Da sich bei den mineralischen Stoffen auch andere Abfallstoffe befinden, können diese erfindungsgemäß mittels der Siebeinrichtung in besonders wirkungsvoller Weise ausgesondert werden. Demgegenüber können die vielfach sowohl im Straßenbau als auch im Landschaftsbau verwendeten Sande mit einer Körnung von 0 bis 2 mm rückgewonnen werden. Da das erfindungsgemäße Verfahren die Entnahme von Wasser und Feststoffen aus einem Vorlagesumpf vorsieht, ist es auch möglich, Rückstände aus der Kanalreinigung, aus Spielplatz-Sandkästen oder ähnlichem aufzubereiten. Die Verwendung eines Hydrozyklons sowie eines nachgeschalteten Wirbelschichtsortierers gestattet es, sowohl Feststoffe oder andere Partikel unterhalb einer unteren Grenzkorngröße, als auch organische Verunreinigungen von dem Sand-Wasser-Gemisch zu trennen. Dieses wird in der nachfolgenden Entwässerungseinrichtung entwässert. Ein wesentlicher Vorteil des erfindungsgemäßen Verfahrens besteht darin, daß sowohl das in der Entwässerungseinrichtung als auch das in dem Hydrozyklon und dem Wirbelschichtsortierer abgetrennte Wasser dem Kreislauf wieder zugeführt werden kann. Hierdurch kann die benötigte Wassermenge erheblich reduziert werden. Alternativ hierzu ist es auch möglich, an den entsprechenden

Verfahrensschritten Frischwasser zuzuführen, um jeweils pumpfähige oder prozessierbare Wasser-Feststoff-Gemische zu erhalten.

Bei dem erfindungsgemäßen Verfahren ist es möglich, den Vorlagesumpf entweder aus einem Sandfang zu befüllen, welcher über eine Pump- und Rohrleitung mit dem Vorlagesumpf verbunden ist, oder, beispielsweise mittels Containern, zu reinigende Feststoffe und/oder Wasser-Feststoff-Gemische zuzuführen.

Besonders günstig ist es, wenn die obere Grenzkorngröße über 2 mm und die untere Grenzkorngröße unter 50 µm gewählt werden. Hierdurch können die wiederverwendbaren Sande Korngrößen im üblichen Bereich aufweisen.

Das in den Vorlagesumpf eingegebene Wasser-Feststoff-Gemisch wird bevorzugterweise über eine Rechenanlage geführt, um Grobpartikel zu entfernen. Das Rechengut kann einer Rechengut-Waschanlage zugeführt werden, es ist auch möglich, diese direkt zu deponieren. Weiterhin kann das Rechengut erfindungsgemäß zerkleinert und einer Kläranlage zugeführt werden. Weiterhin ist es möglich, die in der Siebeinrichtung abgetrennten gröberen Feststoffe zur Rechengutentsorgung zu überführen. Dies kann durch geeignete Fördereinrichtungen oder durch Transport in Containern erfolgen.

Erfindungsgemäß wird die Aufgabe hinsichtlich der Vorrichtung dadurch gelöst, daß diese einen Vorlagesumpf, eine erste Fördereinrichtung zur Zuführung des Wasser-Feststoff-Gemisches zu einer Siebeinrichtung, eine zweite Fördereinrichtung, zur Weiterleitung des Wasser-Feststoff-Gemisches zu einem Hydrozyklon, dessen Ausgangsbereich mit einem Wirbelschichtsortierer in Verbindung steht, sowie mit einer dem Wirbelschichtsortierer nachgeschalteten Entwässerungsvorrichtung versehen ist. Durch die erfindungsgemäß vorgesehene Anordnung der Einzelkomponenten ergibt sich ein platzsparender, kompakter Aufbau der gesamten Anlage. Weiterhin ist ein hoher Wirkungsgrad gewährleistet, welcher, wenn überhaupt, bei den aus dem Stand der Technik bekannten Anlagen nur mit hohem apparatetechnischem Aufwand erreichbar ist. Die erfindungsgemäße Vorrichtung ermöglicht es, einen hohen Prozentsatz der Sande wiederzugewinnen, der wiederverwendbare Anteil liegt bei 40 - 50 %.

Im folgenden wird die Erfindung anhand eines Ausführungsbeispieles in Verbindung mit der Zeichnung beschrieben. Dabei zeigt:

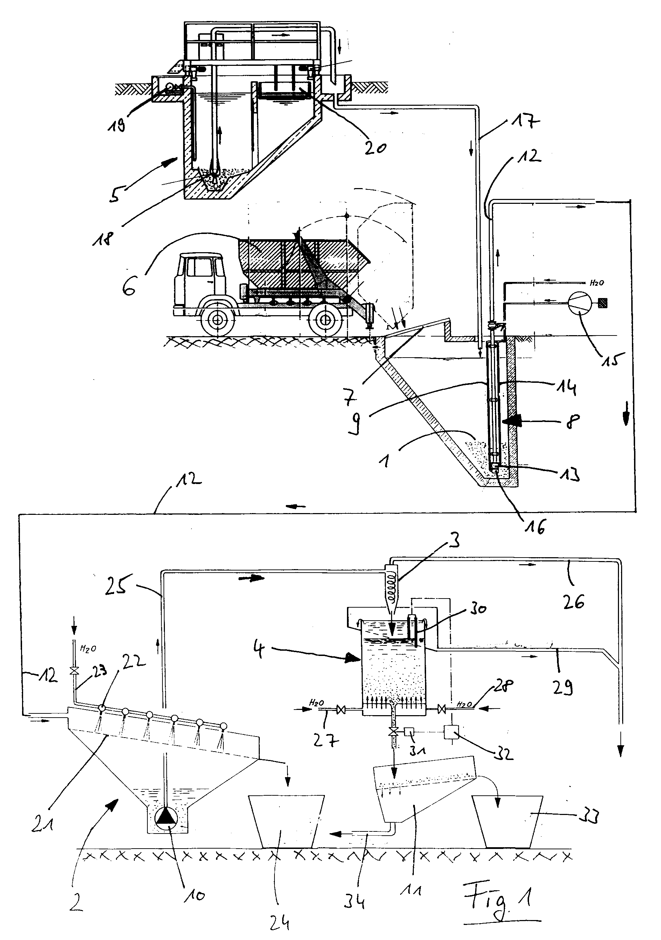

- Fig. 1: eine schematische Seitenansicht der erfindungsgemäßen Vorrichtung.

Die erfindungsgemäße Vorrichtung umfaßt einen Vorlagesumpf 1. Dieser dient zum Auffangen von zu behandelnden Mischungen aus Wasser und Feststoffen. In dem Vorlagesumpf 1 ist eine erste Fördereinrichtung 8 vorgesehen, welche ein Heberrohr 12 umfaßt, an dessen unterem Endbereich ein Hebergehäuse 13 angeordnet ist. Dieses ist mit einer Druckluftleitung 14 verbunden, welche über eine Druckluftquelle 15 gespeist wird. Unterhalb des Hebergehäuses 13 ist ein Freispülgehäuse 16 vorgesehen, welches über eine Wasserzuführeinrichtung 9 mit Wasser beaufschlagbar ist. Die Wasserbeaufschlagung durch die Wasserzuführeinrichtung 9 erfolgt entweder mit Frischwasser oder mit rückgeführtem Wasser aus den nachgeordneten Baugruppen. Die Zuführung des Wassers erfolgt, um den Inhalt in dem Vorlagesumpf in einem hebbaren Zustand zu halten und um unerwünschte Ablagerungen während der Stillstandsphasen auszuschließen, damit ein pumpfähiges Gemisch erhalten wird.

Die Befüllung des Vorlagesumpfes 1 erfolgt entweder mittels Befüllcontainern 6, welche üblicherweise über ein Fahrzeug antransportiert werden können. Im Bereich der Befüllöffnung ist ein Rechen einer Rechenanlage 7 angeordnet, beispielsweise in Form eines Grobrechens mit einem Stababstand von 50 mm. Die Befüllcontainer 6 können beispielsweise einen Rauminhalt von 10 m3 aufweisen.

Alternativ hierzu ist es auch möglich, den Vorlagesumpf 1 über eine Befüll-Leitung 17 aus einem Sandfang 5 zu befüllen. Dieser weist beispielsweise eine Sandförderpumpe 18 auf, sowie eine Sandfangbelüftung 19. In üblicher Weise kann der Sandfang 5 mit einem Schwimmschlammräumschild 20 versehen sein, so wie dies aus dem Stand der Technik bekannt ist.

Wie die Fig. 1 weiterhin zeigt, führt das Heberrohr 12 zu einer Siebeinrichtung 2. Zum Zwecke der deutlicheren Darstellung wurden in Fig. 1 die Baugruppen untereinander angeordnet, in der technischen Realisierung stehen sie bevorzugt nebeneinander.

Die Siebeinrichtung 2 weist ein Vibratorsieb 21 auf, mit Hilfe dessen die Abtrennung von Feststoffen erfolgt, welche in ihrer Größe oberhalb der oberen Grenzkorngröße (beispielsweise größer als 2 mm) liegen. Die Abspülung der Feststoffe erfolgt über Fächerdüsen 22, welche durch eine Wasserleitung mit Wasser beaufschlagt werden. Die Feststoffe werden nachfolgend in einem Container 24 gesammelt. Alternativ hierzu ist es auch möglich, diese zur Rechengutentsorgung der Rechenanlage 7 zu transportieren.

In der Siebeinrichtung 2 ist eine zweite Fördereinrichtung 10 angeordnet, welche beispielsweise eine Pumpe umfassen kann. Durch die zweite Fördereinrichtung 10 wird das Wasser-Feststoff-Gemisch über eine Leitung 25 einem Hydrozyklon 3 zugeführt. Derartige Hydrozyklone sind aus dem Stand der Technik bekannt, so daß auf die Beschreibung eines derartigen Zentrifugalabscheiders verzichtet werden kann. Der Hydrozyklon dient zur Abtrennung von Schlammwasser und von Partikeln unterhalb einer zweiten, unteren Grenzkorngröße von beispielsweise 50 µm. Die abgetrennten Partikel werden über eine Leitung 26 der Kläranlage zugeführt. Es ist jedoch auch eine Rezirkulierung zu der Wasserzuführeinrichtung 9 möglich.

Der Ausgangsbereich des Hydrozyklons 3 mündet in einen Wirbelschichtsortierer 4, welcher in Form eines Aufstromklassierers ausgebildet sein kann. Derartige Klassiereinrichtungen sind aus dem Stand der Technik ebenfalls vorbekannt, so daß sich eine detaillierte Beschreibung erübrigt. Am unteren Bereich des Wirbelschichtsortierers sind Leitungen 27, 28 angeschlossen, über welche Wasser zugeführt werden kann. Der obere Bereich weist eine Ablaufleitung 29 auf, welche zur Zuführung des abgetrennten organischen Schwimmgutes zu einer Kläranlage dient. Somit wird die Hauptfraktion des Wasser-Feststoff-Gemisches mit Korngrößen zwischen 50 µm und 2 mm in dem Wirbelschichtsortierer 4 von anhaftenden organischen Verunreinigungen gereinigt.

Im Bereich des Wirbelschichtsortierers 4 ist weiterhin eine Sensoreinrichtung 30 vorgesehen, welche beispielsweise den Füllstand ermitteln kann. Diese ist mit einem Meß- und Steuergerät einer Steuereinrichtung 32 verbunden, welche wiederum mit einer Ablaßventileinrichtung 31 am unteren Bereich des Wirbelschichtsortierers 4 verbunden ist. Hierdurch ist es möglich, den Verfahrensablauf in dem Wirbelschichtsortierer 4 in exakter Weise zu steuern bzw. zu regeln.

Unterhalb des Wirbelschichtsortierers 4 ist eine Entwässerungsvorrichtung 11 angeordnet, welche beispielsweise eine Entwässerungssiebrinne umfaßt. Hierdurch ist es möglich, den gewaschenen Sand mit Korngrößen zwischen 50 µm und 2 mm zu entwässern und diesen anschließend in einen Container 33 zu überführen. Das restliche Wasser wird über eine Leitung 34 einer Kläranlage zugeführt, es ist jedoch auch möglich, dieses Wasser in den Verfahrenskreislauf zu rezirkulieren.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten.

## Patentansprüche

1. Verfahren zur Trennung von Wasser und Feststoffen, insbesondere zur Gewinnung von wiederverwendbarem Sand, dadurch gekennzeichnet, daß Wasser und Feststoffe aus einem Vorlagesumpf (1) einer Siebeinrichtung (2) zugeführt werden, in welcher Feststoffe, deren Größe oberhalb einer oberen Grenzkorngröße liegt, abgetrennt werden, daß das Wasser und die restlichen Feststoffe einem Hydrozyklon (3) zugeführt werden, in welchem Feststoffe mit einer Größe unterhalb einer unteren Grenzkorngröße abgetrennt werden, daß das Wasser und die restlichen Feststoffe zur Abtrennung von anhaftenden organischen Verunreinigungen einem Wirbelschichtsortierer (4) zugeführt werden, und daß das verbleibende Gemisch entwässert wird.

2. Verfahren nach Anspruch 1, dadurch gekennzeichnet, daß das in der Entwässerung anfallende Wasser rückgeführt wird.

3. Verfahren nach Anspruch 1 oder 2, dadurch gekennzeichnet, daß in den einzelnen Verfahrensschritten jeweils Wasser in Form von Frischwasser oder Rücklaufwasser zugegeben wird.

4. Verfahren nach einem der Ansprüche 1 bis 3, dadurch gekennzeichnet, daß der Vorlagesumpf (1) aus einem Sandfang (5) befüllt wird.

5. Verfahren nach einem der Ansprüche 1 bis 3, dadurch gekennzeichnet, daß der Vorlagesumpf (1) aus Containern (6) befüllt wird.

6. Verfahren nach einem der Ansprüche 1 bis 5, dadurch gekennzeichnet, daß die obere Grenzkorngröße über 2 mm gewählt wird.

7. Verfahren nach einem der Ansprüche 1 bis 6, dadurch gekennzeichnet, daß die untere Grenzkorngröße unter 50 µm gewählt wird.

8. Verfahren nach einem der Ansprüche 1 bis 7, dadurch gekennzeichnet, daß das in den Vorlagesumpf (1) eingegebene Wasser-Feststoff-Gemisch über eine Rechenanlage (7) zur Trennung von Rechengut geführt wird.

9. Verfahren nach Anspruch 8, dadurch gekennzeichnet, daß die in der Siebeinrichtung (2) getrennten Feststoffe dem Rechengut zugegeben werden.

10. Verfahren nach Anspruch 8 oder 9, dadurch gekennzeichnet, daß das Rechengut einer Rechengut-Waschanlage zugeführt wird.

11. Verfahren nach einem der Ansprüche 8 bis 10, dadurch gekennzeichnet, daß das Rechengut zerkleinert und einer Kläranlage zugeführt wird.

12. Verfahren nach einem der Ansprüche 1 bis 11, dadurch gekennzeichnet, daß die in der Siebeinrichtung (2), dem Hydrozyklon (3) und/oder dem Wirbelschichtsortierer (4) abgetrennten Feststoffe einer Kläranlage zugeführt werden.

13. Vorrichtung zur Trennung von Wasser und Feststoffen, insbesondere zur Durchführung des Verfahrens nach einem der Ansprüche 1 bis 12, gekennzeichnet durch einen Vorlagesumpf (1) eine erste Fördereinrichtung (8) zur Zuführung des Wasser-Feststoff-Gemischs zu einer Siebeinrichtung (2), eine zweite Fördereinrichtung (10) zur Weiterleitung des Wasser-Feststoff-Gemisches zu einem Hydrozyklon (3), dessen Ausgangsbereich mit einem Wirbelschichtsortierer (4) in Verbindung steht, sowie mit einer dem Wirbelschichtsortierer (4) nachgeschalteten Entwässerungsvorrichtung (11).

14. Vorrichtung nach Anspruch 13, dadurch gekennzeichnet, daß die erste Fördereinrichtung (8) eine Druckluft-Hebeeinrichtung umfaßt.

15. Vorrichtung nach Anspruch 14, dadurch gekennzeichnet, daß die Hebeeinrichtung (8) mit einer Wasserzuführeinrichtung (9) versehen ist.

16. Vorrichtung nach einem der Ansprüche 13 bis 15, dadurch gekennzeichnet, daß im Einfüllbereich des Vorlagesumpfes (1) eine Rechenanlage (7) angeordnet ist.

17. Vorrichtung nach einem der Ansprüche 13 bis 16, dadurch gekennzeichnet, daß die Siebeinrichtung (2) ein Vibratorsieb (21) umfaßt.

18. Vorrichtung nach einem der Ansprüche 13, bis 17, dadurch gekennzeichnet, daß der Wirbelschichtsortierer (4) mit einer Sensoreinrichtung (30) und einer Ablaßventileinrichtung (31) versehen ist, welche mit einer Steuereinrichtung (32) verbunden sind.
